# EUROPEAN PATENT APPLICATION

(11) **EP 2 040 053 A1**
(43) Date of publication of application: **25.03.2009**
(21) Application number: 07788631.5
(22) Date of filing: 28.06.2007
(51) Int. Cl.: G01L 1/20

(54) **TORSION AND/OR TENSION AND/OR PRESSURE TEXTILE SENSOR**

(30) Priority: 06.07.2006 ES 200601847
(71) Applicant: Fundacio Privada Per A La Innovacio Textil D'Igual, 08700 Igualada Barcelona (ES)
(72) Inventor: RIDAO GRANADO, Miguel, 08700 Igualada (Barcelona) (ES); GARCIA USLE, David, 08700 Igualada (ES); ESCUDERO GARCIA, Juan, 08700 Igualada (Barcelona) (ES); CASTELLS I SANABRA, Thais, 08700 Igualada (Barcelona) (ES); CAMPRUBI JAMILA, Pius, 08700 Igualada (Barcelona) (ES)
(74) Representative: Barroso Sánchez-Lafuente, Ignacio M.
(86) International application number: PCT/ES2007/000383
(87) International publication number: WO 2008/003804

(57) **Abstract**

The invention relates to a torsion and/or tension and/or pressure textile sensor. The textile sensor is a resistive-type sensor consisting of: at least one base layer of fabric (1) comprising any composition and/or mixture and produced using any technique; optionally a surface treatment (2) in order to render the surface of the fabric (1) more uniform; a single conductive layer (3) having tracks distributed geometrically such as to define areas (31) sensitive to stresses from conductive fluids and an encapsulation and protection layer (4) on the conductive layer (3); optionally an upper fabric layer (5); and a least one signal converter (7) which is connected to the tracks, such that when one of the above-mentioned areas (31) is subjected to pressure, tension or torsion a large variation in the resistance of said track is produced, which can be detected by the converter (7). The sensor optionally includes an imprint (6) defining the aforementioned areas (31) on the outer face of either of the fabric layers (1,5).

## Description

### Object of the invention

The present invention relates to a pressure and/or tension and/or torsion textile sensor applied on one or more areas of its textile surface.

### Prior state-of-the art

At present, stress textile sensors are mainly based upon the use of metallic wires.

In the case of a pressure textile sensor, the conducting wires form two conductive layers that are separated by a non-conductive or partially conductive intermediate layer that may be continuous or discontinuous.

With this construction, the sensor properties may be a resistance variation because the two conductive layers get in contact due to the pressure while the intermediate layer does not avoid it and provides the recovering of the positioning of the layers once the pressure has disappeared. This kind of sensors is termed resistive sensors. In other kind of sensors, the sensor properties are a variation of the capacity of the condenser resulting from the interposition of a dielectric or non-conductive layer between both conductive layers. The capacity between the layers or the wires varies because the distance between the electrodes or the conductive layers of the design also varies. This kind of sensors is termed capacitive sensors.

In the case of tensile stress sensors, the conducting wires have piezoresistive properties, an intrinsic property of the material through which a tensile stress may obtain a variation of the resistance.

There are no references about textile torsion sensors.

There have been several types of devices that may achieve that a woven fabric or a sheet of fabric can behave like an effort sensor -specially by contact stress- in order to obtain the implementation of electronic devices to a piece of cloth, a flexible sheet and other similar.

It is well known the patent application PCT WO2005121729 by ETH ZÜRICH ETH TRANSFER. This patent discloses a capacitive-type pressure sensor by contact. The principle of actuation of a sensor provided with a capacitive system is formed at least by three layers, being two layers of a conductive type and the third one of a non-conductive type in order to form the capacitor, being one of the conductive layers of the continuous type and the other conductive layer formed by several electrodes separated in such a way that the different distribution of stress on its surface may be measured.

It is also well known the patent application PCT W02005096133 by KONINK PHILIPS ELECTRONICS NV. This patent discloses a pressure sensor by contact formed by three layers: two conductive layers and one non-conductive intermediate layer made of piezoresistive material distributed in a non-continuous way on the intermediate layer.

It is well known the German register DE102001025237 by TEXTILFORSCHUNG-INSTITUT THÜRINGEN VOGT. This document discloses a pressure and effort sensor based on conducting wires that form a net. The distortion of the wires due to the distortion of the net causes a variation of the resistance. The object obtained is a traction sensor that is used to determine the pressure, therefore it may carry out only one measurement.

It is well known the patent FR2834788 by LAB ELECTRONIQUE ANGELIDIS & SARRAULT. This patent discloses a pressure sensor by contact having both faces of the isolating woven fabric impregnated with conductive particles prepared through an impregnation process or by the dilution of metallic particles. The operation of this sensor is carried out using a module that compares the varying electric capacity of the fabric when is pressured. This sensor is an active system formed by three layers of capacitive type aimed to detect a presence.

It is well known the patent application PCT WO2005073685 by ELEKSEN LTD. This patent discloses a lineal sensor formed by conducting wires laid on two layers of fabric, one layer in a lengthwise sense and the other layer on a crosswise sense and the conduction is obtained when the surface is pressured and the wires on both faces get into contact.

It is well known the patent application PCT WO0161298 by BREED AUTOMOTIVE TECHNOLOGY INC. This patent discloses a device aimed to detect the output voltage, therefore the instant when buttons and sensors have a loss of voltage, which is disclosed in the following patents: US 5398962, US 5563354 and US 5541570 that are based on conductive inks deposited on plastic films aimed to the development of presence sensors for the automotive industry.

It is well known the USA patent US 5371326 by DREAGER TN. This patent discloses the development of an electrical conductor aimed to toys manufacturing where a conductive material is deposited on a non-woven fabric that may be used as a switch when the particles of conductive material get into contact between the said fabric.

### Description of the invention

The pressure and/or tension and/or torsion textile sensor disclosed by this invention includes a series of technical features aimed to obtain a so called "intelligent fabric" that may allow its implementation -among other applications- by an individual as an input device and interface to an electronic device as a basic implementation. Additionally, this procedure allows a highly regular deposition of conductive tracks that are suitable for the feeding and transmission of data between electronic devices, i.e. all the implementations derived from the intelligent fabric, for instance: LEDs embedded in the fabric and fed by the tracks, textile connection wires and circuit flexible plates too.

The present invention is a pressure and/or tension and/or torsion textile sensor of a resistive type provided with a single conductive layer, a huge area, high resolution, and made 100% using textile materials and processes.

This textile sensor has a series of superimposed layers, consisting at least in the following layers:
a) A layer made of a base fabric of any composition and/or mixture of materials and processed using any weaving technique: knitted fabrics, woven fabrics and/or non-woven fabrics with or without uniformity on its surface. If the fabric is not uniform, a surface treatment may be added in order to obtain due uniformity. This treatment may be e.g. a polymeric coating applied to the base of the fabric layer. It is well known that the polymeric coating is usually applied on fabrics in order to enhance their abrasion and durability resistance, provide hydrostatic resistance with or without transpirability according with the selected porosity and/or flame retard, among other properties. The coating may improve the surface uniformity of the fabric while providing a good adhesion to the conductive fluids.
b) A conductive layer laid on the fabric layer obtained through deposition of conductive fluids on the layer of base fabric, being defined the conductive layer by the tracks that define the stress areas. These fluids may be composed of metallic particles, carbon or conductive polymers, for instance. For the most part these fluids are produced using metallic particles, as silver or copper, or using carbon particles deposited on a support matrix material, but at present inks based on conductive polymers are available. Polymeric resins named PTF (Polymer Thick Film) form this support matrix. These PTF may be thermoplastic or thermo-stable. Both types may be used in the development of these sensors of stress. These fluids may be deposited, e.g. using a conventional process of fabric imprint, like silkscreen imprint and to reach the same objective, digital conductive fluids applied through digital imprint may be used. A fabric digital imprint is a more versatile manufacturing process. In either manufacturing systems, the design of the conductive tracks is carried out using a design system preferentially assisted by a computer.
c) An encapsulation and protection layer of the conductive layer. E.g. polymers may form this layer. These polymers are high-temperature resistant, have a good viscosity and are adjusted easily to molding. These polymers are suitable to be adhered to polyester, cotton and any other combination of fabrics.
d) Optionally an upper layer of fabric of any composition and/or mixture created using any fabric technique: knitted fabrics, openwork fabrics and/or non-woven fabrics, with or without surface uniformity.
e) A signal converter connected to the conductive tracks aimed to carry out the detection of the stress by means of the measurement of the variations of the tracks resistance while a digital signal is issued.
f) Optionally an imprint on any of either outer face of the fabric layer structure, being defined this imprint by the icon of the activation area. This imprint may be carried out using any conventional imprint technique and/or using any digital fabric.

The operation principle of the pressure textile sensor is based on an embodiment of tracks with a filamentous shaping that at one given point of its length may define at least one area of stress having a zigzag or a spiral shape or any other shape of a very great length on a small surface.

This area of stress termed as activation area may cover a specified surface, e.g. for the implementation of a pressure textile sensor by contact to be used in push buttons, its surface may be equal or greater than the average surface of a finger during the pressure contact. The purpose of the activation area is that when being distorted by pressure, the stress on the area must produce the highest variation of the track resistance. The resistance of an imprint line with the conductive fluid varies dramatically when a stress is applied over it. This resistance variation is caused by the distortion of the tracks when subjected to a pressure stress in the Z sense. For instance, in this case the distortion becomes evident in all the X, Y and Z senses of the tracks, originating an increase of the resistance. For instance, a layer structure may undergo a maximal 12% distortion on the Z axe with pressures of 1.5 kgf/cm² (average maximal pressure exercised with the index finger on an average contact surface of 1.5 cm²), in compliance with the chosen materials.

Advantage may be taken from this fact in order to obtain the desired functionality even if the value of the mentioned resistance when no pressure is applied has a huge assortment of values due to variations during the manufacturing process. In any case, this left-to-stand resistance is within a range of a few hundred ohms and its variation when the activation area is subjected to pressure may be of about the sixth magnitude (from some few hundred ohms up to several mega ohms).

If every track is subjected to monitored voltage at its output, a varying signal may be obtained that varies according with the stress pattern (or lack of stress) exerted on the zigzag areas or its extension in case of a tension stress. The value of the reference voltage is not relevant by itself, but provides the possibility of adjusting the circuit's sensitivity according with the equivalent resistance value of the fabric conductive track, i.e. on the defined stress area.

This signal converter is the responsible of the obtainment of a digital signal as a response to the stress exerted on the fabric on the areas related with the zigzag and other filamentous designs on a small surface. Once this standard digital signal has been obtained, it may be sent to an electronic device in order to obtain the interpretation or adjustment of the operation.

The signal converter may include a potentiometer or similar device for monitoring the sensitivity according with the stress and the response of the zigzag area or filamentous design and a voltage divider, e.g. a resistance, which may define the trigger threshold.

The activation on the textile sensor at the input of the converter causes a variation of the resistance in the signal up ramps and especially in down ramps, which is neither instantaneous, nor constant nor repetitive, but a transient period is caused during which the conductive track is adjusting the resistance. The comparator used in the converter has a hysteresis high enough as to absorb these variations and generate a stable digital signal. It is also possible to carry out a post-process of the digital signal.

It is possible that due to design requirements, a track may show more than one stress area, being these areas laid in a serial arrangement.
With several tracks superimposed in crossed senses, a matrix design may be carried out to allow the multiplexing of several activation areas.

In fact the sensor may include an enlarged structure between the encapsulation and protection layer and the upper fabric layer, where a second sensitive conductive layer of tracks is placed. Every track in a layer has a plurality of activation areas that match up with the activation areas in the track of the added layer. These added tracks are arranged transversally to the alignment of the first layer tracks, therefore any stress on any of the zigzag areas or filamentous design of the textile sensor track may cause the activation of a single track in every layer, thus with only two signals the respective activation area may be determined. For this, the sensor is completed with a multiplexing converter for the matrix treatment of the several tracks that are laid on the two layers in a quicker way than a comparator's track-by-track. It has been planned that the mentioned multiplexing converter shall also be suitable for the monitoring of several tracks on a single layer.

### Description of the graphics

In order to round off this description and with the aim of making easier the understanding of the features of this invention, enclosed to this descriptive report is a set of graphics which illustrative and non-restricting nature stands for the following:
- FIG. 1 shows a cross section of a sensor with the different layers of construction;
- FIG. 2 shows a ground view of a sensor with two sensitive stress areas relevant to two push buttons as way of an example.
- FIG. 3 shows a diagram illustration of a track with a plurality of activation areas.
- FIG. 4 shows a cross section of a matrix-type sensor with the different layers among which the two layers that form the matrix structure protrude.
- FIG. 5 shows a ground view of the two layers of displaced tracks.
- FIG. 6 shows a diagram of an example of an electric circuit of the signal converter on one layer.

### Preferred realization of the invention

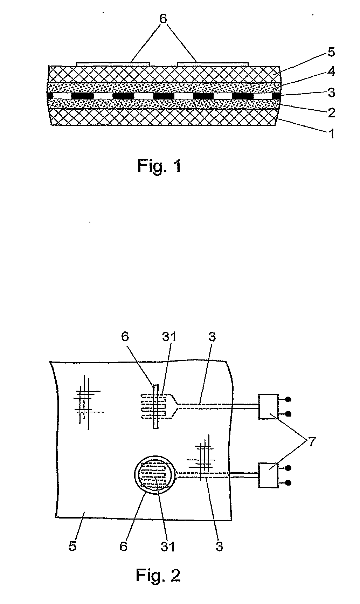

As may be noticed in the referenced figures, the textile sensor has been configured in compliance with a laminated structure that includes:
- a layer of base fabric (1) forming one of the outer surfaces,
- optionally, a surface treatment (2) to even the fabric (1),
- a single conductive layer (3) of tracks produced with conductive fluids, conforming each track one area of stress or activation (31) by means of the distortion on the fabric layer (1) and optionally of the surface treatment (2), thus an electric layer sensitive to the stresses is configured while being these tracks (3) deposited on the fabric layer (1) and optionally on the surface treatment (2) like, e.g. through digital imprint,
- an encapsulation and protection layer (4) on the conductive layer (3), like e.g. thermoplastic reactable-type polymers applied in the shape of a sheet using temperature and pressure, because they have adhesive properties,
- a signal converter (7) that converts the resistance variation of the track configured on the layer (3) by distortion and finally the tearing obtained applying the stresses on the laminated structure to a digital signal that may be send to a device or mechanism (not shown) or similar for its interpretation and arrangement in order it may operate some other device,
- optionally, an upper fabric layer (5) produced using any technique and composition and/or mixture forming the second outer side,
- optionally, an imprint (6) on one of the outer faces of the sheets of fabric (1, 5), being defined in this imprint (6) the icons and characters matching the areas sensitive (31) to stresses, as shown in figure 2.

The conductive layer (3) of tracks as shown in figure 2 has the pressure area (31) configured like a solid zigzag or a filamentous design on a small area, being used on this track a conductive fluid with silver particles.

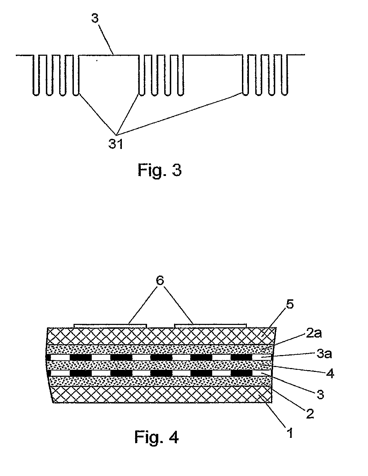

In figure 3 it may be noticed one track of the layer (3) with several areas of stress (31) in a serial arrangement aimed to define several points of stress, preferably pressure, like buttons or pressure points on the tactile sensor.

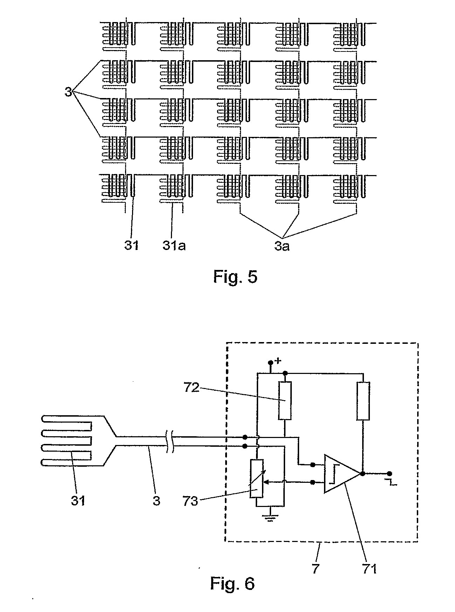

In one alternative embodiment there is possible to produce the sensor in compliance with one matrix sensor structure having several zigzag areas, including this sensor between the encapsulation and protection layer (4) and the upper fabric layer (5) a second sensitive layer (3a) of conductive tracks and a surface treatment (2a), thus enabling the configuration of two sensitive layers (3, 3a) of superimposed tracks. These tracks of the layers (3; 3a) are shown in figure 5, where it may be noticed a first layer shaped by tracks (3) with several areas of stress (31) in a parallel arrangement and a second layer shaped by transversal tracks (3a) that are also shaped in a similar way but in a crosswise sense, being the areas of stress (31) of a layer superimposed to at least one area of stress (31a) of the other layer thus to form a coordinate.

In this configuration, the tracks of both layers (3, 3a) are connected to a signal converter (not shown, but of a similar type like shown in figure 6), a multiplexing converter in this case for the detection of the coordinate or couple of areas of stress superimposed to all the defined tracks.

The converter (7) includes mainly a comparator of tension (71) that circulates by the track (3) and a voltage divider resistance (72) that limits the trigger threshold, being both subjected to a specified voltage while taking as a reference the voltage of a potentiometer (73) or a variable resistance establishing the sensitivity.

The nature of this invention has been explained above with reference to the aforementioned embodiment. However, it is clear that the materials, shape, size and arrangement of the disclosed elements may be modified but only when no alteration is caused on the essential features of the invention, which claims are listed below.

## Claims

1. A pressure and/or tension and/or torsion textile sensor **characterized in that** is formed by:
- at least one base fabric layer (1) of any composition and/or mixture of materials carried out using any technique.
- a conductive layer (3) defined by the deposition of conductive fluids on the base layer (1) with track geometric designs, being these tracks sensitive to the stress caused by distortion and/or rupture produced by the stress on its entirety and/or the stress areas (31) and by their springback originated by the materials of the adjacent layers,
- at least one layer of encapsulation and protection (4) on the layer (3) of the conductive tracks,
- at least one signal converter (7) connected to the tracks of the conductive layer (3), directly or through conductors.

2. A sensor, according with claim 1, **characterized in that** the base layer of fabric (1) includes in its surface a surface treatment (2) acting as a support of the conductive layer with the aim of obtaining a uniform surface.

3. A sensor, according with claim 1, **characterized in that** may incorporate a layer of upper fabric (5) made using any technique, any composition and/or mixture laid on the encapsulation and protection layer (4).

4. A sensor, according with any claim 1, 3, **characterized in that** it includes an alternative layer or imprint (6) that defines the stress areas (31) on the outer face of either layer of fabric (1, 5).

5. A sensor, according with claim 1, **characterized in that** the areas of stress (31) of the tracks on the conductive layer (3) have been configured in a zigzag, spiral or any other very long shape on a small surface.

6. A sensor, according with claim 1, **characterized in that** the conductive fluid of the conductive layer tracks (3) is made of conductive particles of any nature, like e.g. metallic, carbon or conductive polymers.

7. A sensor, according with claim 1, **characterized in that** the conductive fluid of the conductive layer tracks (3) may be deposited using any imprint technique that can include a digital process.

8. A sensor, according with any claim 1 and 2, **characterized in that** the surface treatment (2) may be a polymeric coating with electric and thermal isolation properties.

9. A sensor, according with claim 1, **characterized in that** the conductive layer (3) has a track provided with more than a stress area (31) laid in a serial arrangement.

10. A sensor, according with claim 1, **characterized in that** the layer of encapsulation and protection (4) includes reactable polymers that afford insulation and protection while adding adhesive properties.

11. A sensor, according with claim 1, **characterized in that** the signal converter (7) includes at least a resistance and/or voltage comparator (71) in order to cause a digital and/or bi-stable output

12. A sensor, according with any claim 1 and 3, **characterized in that** may incorporate between the encapsulation and protection layer (4) and the upper fabric layer (5) a second sensitive conductive layer (3a) of tracks and one layer of surface treatment (2a) aimed to the shaping of a matrix sensor with the purpose of including a simpler signal converter.

13. A sensor, according with any claim 1, 5, 9, 11 and 12 **characterized in that** the converter (7) is a multiplexing converter aimed to the matrix treatment of several conductive layers of tracks (3, 3a) arranged in one or two layers.
